# EUROPEAN PATENT APPLICATION

(11) **EP 3 893 533 A1**
(43) Date of publication of application: **13.10.2021**
(21) Application number: 18943586.0
(22) Date of filing: 20.12.2018
(51) Int. Cl.: H04W 4/40

(54) **DATA TRANSMISSION METHOD AND APPARATUS**

(71) Applicant: Beijing Xiaomi Mobile Software Co., Ltd., Beijing 100085 (CN)
(72) Inventor: LI, Yuanyuan, Beijing 100085 (CN)
(74) Representative: Gevers Patents
(86) International application number: PCT/CN2018/122362
(87) International publication number: WO 2020/124486

(57) **Abstract**

The present invention relates to a data transmission method and apparatus. The method comprises: when data to be transmitted is subjected to resource mapping on a first symbol of an available transmission resource, determining, according to a pre-acquired carrier period configuration factor and a second sub-carrier period used by a second symbol of the available transmission resource, a first sub-carrier period used by the first symbol of the available transmission resource, at least one target sub-carrier, an IFFT count and a zero setting length; mapping said data onto each target sub-carrier on a frequency domain; modulating said data according to each target sub-carrier and the IFFT count to obtain a time-domain symbol; setting information of a pre-zero setting length of the time-domain symbol to be zero in order to obtain an output symbol; and emitting the output symbol. The technical solution can realize the function of a guard period, and can improve the decoding performance and the system performance.

## Description

### TECHNICAL FIELD

The present invention relates to the technical field of communication, and more particularly, to a data transmission method and apparatus.

### BACKGROUND

Vehicle to Everything (V2X) refers to a new-generation information communication technology for connecting vehicles to everything. V2X includes Vehicle to Vehicle (V2V), Vehicle to Pedestrian (V2P), and Vehicle to Infrastructure (V2I). Cellular based V2X (C-V2X) is a wireless communication technology for vehicles formed based on such as a 3rd-Generation (3G)/4th-Generation (4G)/5th-Generation (5G) cellular communication technology, and usually includes two types of communication interfaces: one is short-distance direct communication interface (PC5) between a vehicle, a pedestrian and an infrastructure, and the other is a cellular communication interface (Uu) capable of implementing long-distance reliable communication of a larger range. A communication standard for the PC5 interface in V2X is based on Device to Device (D2D), and a broadcast communication manner is used, namely information is sent by broadcasting to multiple vehicles from a single vehicle.

In the related art, in a Long Term Evolution (LTE) V2X communication technology, a subcarrier spacing is fixed to be 15KHz, and scheduling is performed in a unit of subframe. The length of a subframe is 1ms, and a subframe includes 14 symbols. During rate matching for data, the number of bits that can be borne is calculated according to loads of the 14 symbols. However, during mapping from a logical channel to a physical channel, considering interferences of a base station to uplink/downlink data, a Guard Period (GP) is introduced, namely no data is practically sent on the last symbol of each subframe, making it impossible for a receiving device to obtain useful information of at least one symbol, reducing the decoding performance and affecting the quality of service and the system performance.

### SUMMARY

Examples of the invention provide a method and apparatus for data transmission. The technical solutions are implemented as follows.

According to a first aspect of the invention, a method for data transmission method is provided, applied to a sending device and including: during performing resource mapping of data to be transmitted onto a first symbol of an available transmission resource, determining a first subcarrier spacing, at least one target subcarrier, a number of inverse fast fourier transform (IFFT) points and a zero-setting length for the first symbol of the available transmission resource, according to a carrier spacing configuration factor and a second subcarrier spacing for a second symbol of the available transmission resource; mapping, in a frequency domain, the data to be transmitted to each of the at least one target subcarrier; modulating the data to be transmitted according to each of the at least one target subcarrier and the number of IFFT points to obtain a time-domain symbol; setting foremost information of the zero-setting length in the time-domain symbol to 0 to obtain an output symbol; and transmitting the output symbol.

In the method for data transmission provided in the examples of the invention, during performing resource mapping of the data to be transmitted onto the first symbol of the available transmission resource, resource mapping is performed in the frequency domain using the first subcarrier spacing determined based on the carrier spacing configuration factor, and the foremost information of the zero-setting length in the time-domain symbol obtained by modulation is set to 0. When receiving the output symbol from the sending device, a receiving device does not process or perform statistics on the foremost information of the zero-setting length in the output symbol, and instead, modulates and processes remaining information in the output symbol except the zero-setting length to obtain the data to be transmitted, so that a function as GP is realized. Since a last symbol of each subframe contains information, the problem in the related art that the receiving device loses useful information of at least one symbol because no data is sent on the last symbol can be solved. The decoding performance can be improved, and the quality of service and the system performance can be improved.

In an example, the operation of determining the first subcarrier spacing, the at least one target subcarrier, the number of inverse fast fourier transform (IFFT) points and the zero-setting length for the first symbol of the available transmission resource, according to the carrier spacing configuration factor and the second subcarrier spacing for the second symbol of the available transmission resource includes: calculating, based on a formula T1=T2*2ⁿ, the first subcarrier spacing T1 for the first symbol of the available transmission resource, wherein T2 is the second subcarrier spacing for the second symbol of the available transmission resource, and n is the carrier spacing configuration factor; determining each of the at least one target subcarrier in the frequency domain of the first symbol of the available transmission resource according to the first subcarrier spacing for the first symbol of the available transmission resource; calculating, based on a formula N1=N2/2ⁿ, the number of IFFT points N1 for the first symbol of the available transmission resource according to a number of IFFT points N2 for the second symbol of the available transmission resource; and calculating, based on a formula L0=1-1/2ⁿ, the zero-setting length L0.

In an example, the carrier spacing configuration factor is equal to 1 in response to that a carrier frequency band of the available transmission resource is greater than 6GHz; or, a value of the carrier spacing configuration factor includes 1, 2, or 3 in response to that the carrier frequency band of the available transmission resource is less than 6GHz.

In an example, the method further includes one of following acts: receiving a first control signaling from a network access device, and parsing the first control signaling to obtain the carrier spacing configuration factor; receiving a second control signaling from a cluster header device in a cluster to which the sending device belongs, and parsing the second control signaling to obtain the carrier spacing configuration factor; or determining the carrier spacing configuration factor according to a processing capability of the sending device.

In an example, the method further includes: sending a third control signaling to a receiving device, the third control signaling including the carrier spacing configuration factor.

According to a second aspect of the invention, a method for data transmission is provided, applied to a receiving device and including: determining a first subcarrier spacing, a number of fast fourier transform (FFT) points and a zero-setting length for a first symbol of an available transmission resource of a sending device according to a carrier spacing configuration factor; and in response to receiving an output symbol from the sending device, determining data to be transmitted according to the carrier spacing configuration factor, the number of FFT points and remaining information in the output symbol except the zero-setting length.

In an example, the method further includes one of following acts: receiving a third control signaling from the sending device, and parsing the third control signaling to obtain the carrier spacing configuration factor; receiving a fourth control signaling from a network access device, and parsing the fourth control signaling to obtain the carrier spacing configuration factor; or receiving a fifth control signaling from a cluster header device in a cluster to which the receiving device belongs, and parsing the fifth control signaling to obtain the carrier spacing configuration factor.

In an example, the operation of determining the first subcarrier spacing, the number of fast fourier transform (FFT) points and the zero-setting length for the first symbol of the available transmission resource of the sending device according to the carrier spacing configuration factor includes: calculating, based on a formula T1=T2*2ⁿ, the first subcarrier spacing T1 for the first symbol of the available transmission resource of the sending device, wherein T2 is a second subcarrier spacing for a second symbol of the available transmission resource of the sending device, and n is the carrier spacing configuration factor; calculating, based on a formula N3=N4/2ⁿ, the number of FFT points N3 for the first symbol of the available transmission resource of the sending device according to a number of FFT points N4 for the second symbol of the available transmission resource of the sending device; and calculating, based on a formula L0=1-1/2ⁿ, the zero-setting length L0.

According to a third aspect of the invention, an apparatus for data transmission is provided, including: a first determination module, configured to: during performing resource mapping of data to be transmitted onto a first symbol of an available transmission resource, determine a first subcarrier spacing, at least one target subcarrier, a number of inverse fast fourier transform (IFFT) points and a zero-setting length for the first symbol of the available transmission resource, according to a carrier spacing configuration factor and a second subcarrier spacing for a second symbol of the available transmission resource; a mapping module, configured to map, in a frequency domain, the data to be transmitted to each of the at least one target subcarrier; a modulation module, configured to modulate the data to be transmitted according to each of the at least one target subcarrier and the number of IFFT points to obtain a time-domain symbol; a processing module, configured to set foremost information of the zero-setting length in the time-domain symbol to 0 to obtain an output symbol; and a transmitting module, configured to transmit the output symbol.

In an example, the first determination module includes: a first calculation submodule, configured to calculate, based on a formula T1=T2*2ⁿ, the first subcarrier spacing T1 for the first symbol of the available transmission resource, wherein T2 is the second subcarrier spacing for the second symbol of the available transmission resource, and n is the carrier spacing configuration factor; a determination submodule, configured to determine each of the at least one target subcarrier in the frequency domain of the first symbol of the available transmission resource according to the first subcarrier spacing for the first symbol of the available transmission resource; a second calculation submodule, configured to calculate, based on a formula N1=N2/2ⁿ, the number of IFFT points N1 for the first symbol of the available transmission resource according to a number of IFFT points N2 for the second symbol of the available transmission resource; and a third calculation submodule, configured to calculate, based on a formula L0=1-1/2°, the zero-setting length L0.

In an example, the carrier spacing configuration factor is equal to 1 in response to that a carrier frequency band of the available transmission resource is greater than 6GHz; or a value of the carrier spacing configuration factor includes 1, 2, or 3 in response to that the carrier frequency band of the available transmission resource is less than 6GHz.

In an example, the apparatus may further include one of following: a first receiving module, configured to receive a first control signaling from a network access device, and parse the first control signaling to obtain the carrier spacing configuration factor; a second receiving module, configured to receive a second control signaling from a cluster header device in a cluster to which the sending device belongs, and parse the second control signaling to obtain the carrier spacing configuration factor; or a second determination module, configured to determine the carrier spacing configuration factor according to a processing capability of the sending device.

In an example, the apparatus may further include: a sending module, configured to send a third control signaling to a receiving device, the third control signaling including the carrier spacing configuration factor.

According to a fourth aspect of the invention, an apparatus for data transmission apparatus is provided, including: a third determination module, configured to determine a first subcarrier spacing, a number of fast fourier transform (FFT) points and a zero-setting length for a first symbol of an available transmission resource of a sending device according to a carrier spacing configuration factor; and a fourth determination module, configured to: in response to receiving an output symbol from the sending device, determine data to be transmitted according to the carrier spacing configuration factor, the number of FFT points and remaining information in the output symbol except the zero-setting length.

In an example, the apparatus may further include one of following: a third receiving module, configured to receive a third control signaling from the sending device, and parsing the third control signaling to obtain the carrier spacing configuration factor; a fourth receiving module, configured to receive a fourth control signaling from a network access device, and parsing the fourth control signaling to obtain the carrier spacing configuration factor; or a fifth receiving module, configured to receive a fifth control signaling from a cluster header device in a cluster to which the receiving device belongs, and parsing the fifth control signaling to obtain the carrier spacing configuration factor.

In an example, the third determination module is further configured to: calculate, based on a formula T1=T2*2ⁿ, the first subcarrier spacing T1 for the first symbol of the available transmission resource of the sending device, wherein T2 is a second subcarrier spacing for a second symbol of the available transmission resource of the sending device, and n is the carrier spacing configuration factor; calculate, based on a formula N3=N4/2ⁿ, the number of FFT points N3 for the first symbol of the available transmission resource of the sending device according to a number of FFT points N4 for the second symbol of the available transmission resource of the sending device; and calculate, based on a formula L0=1-1/2ⁿ, the zero-setting length L0.

According to a fifth aspect of the invention, an apparatus for data transmission is provided, including: a processor; and a memory configured to store instructions executable for the processor, wherein the processor may be configured to: during performing resource mapping of data to be transmitted onto a first symbol of an available transmission resource, determine a first subcarrier spacing, at least one target subcarrier, a number of inverse fast fourier transform (IFFT) points and a zero-setting length for the first symbol of the available transmission resource, according to a carrier spacing configuration factor and a second subcarrier spacing for a second symbol of the available transmission resource; map, in a frequency domain, the data to be transmitted to each of the at least one target subcarrier; modulate the data to be transmitted according to each of the at least one target subcarrier and the number of IFFT points to obtain a time-domain symbol; set foremost information of the zero-setting length in the time-domain symbol to 0 to obtain an output symbol; and transmit the output symbol.

According to a sixth aspect of the invention, an apparatus for data transmission is provided, including: a processor; and a memory configured to store instructions executable for the processor, wherein the processor is configured to: determine a first subcarrier spacing, a number of fast fourier transform (FFT) points and a zero-setting length for a first symbol of an available transmission resource of a sending device according to a carrier spacing configuration factor; and in response to receiving an output symbol from the sending device, determine data to be transmitted according to the carrier spacing configuration factor, the number of FFT points and remaining information in the output symbol except the zero-setting length.

According to a seventh aspect of the invention, a computer-readable storage medium is provided, having stored thereon computer instructions which, when executed by a processor, implement the steps of the method as described in the first aspect.

According to an eighth aspect of the invention, a computer-readable storage medium is provided, having stored thereon computer instructions which, when executed by a processor, implement the steps of the method as described in the second aspect.

It should be understood that the above general descriptions and detailed descriptions below are only exemplary and explanatory and are not intended to limit the invention.

### BRIEF DESCRIPTION OF THE DRAWINGS

The accompanying drawings, which are incorporated in and constitute a part of this specification, illustrate examples consistent with the invention and, together with the description, serve to explain the principles of the invention.
FIG. 1 illustrates a flow chart of a data transmission method according to an example.
FIG. 2 illustrates a flow chart of a data transmission method according to an example.
FIG. 3 illustrates a flow chart of a data transmission method according to an example.
FIG. 4 illustrates a schematic diagram of frequency-domain resource mapping on a first symbol according to an example.
FIG. 5 illustrates a schematic diagram of frequency-domain resource mapping on a first symbol according to an example.
FIG. 6 illustrates a schematic diagram of frequency-domain resource mapping on a first symbol according to an example.
FIG. 7 illustrates a block diagram of an apparatus for data transmission according to an example.
FIG. 8 illustrates a block diagram of an apparatus for data transmission according to an example.
FIG. 9A illustrates a block diagram of an apparatus for data transmission according to an example.
FIG. 9B illustrates a block diagram of an apparatus for data transmission according to an example.
FIG. 9C illustrates a block diagram of an apparatus for data transmission according to an example.
FIG. 10 illustrates a block diagram of an apparatus for data transmission according to an example.
FIG. 11 illustrates a block diagram of an apparatus for data transmission according to an example.
FIG. 12A illustrates a block diagram of an apparatus for data transmission according to an example.
FIG. 12B is a block diagram of a data transmission apparatus, according to an example.
FIG. 12C illustrates a block diagram of an apparatus for data transmission according to an example.
FIG. 13 illustrates a block diagram of an apparatus for data transmission according to an example.
FIG. 14 illustrates a block diagram of an apparatus for data transmission according to an example.
FIG. 15 illustrates a block diagram of an apparatus for data transmission according to an example.
FIG. 16 illustrates a block diagram of an apparatus for data transmission according to an example.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the invention. Instead, they are merely examples of apparatuses and methods consistent with aspects related to the invention as recited in the appended claims.

The examples of the invention provide a method for data transmission, which is applied to a sending device. The method includes the following. During performing resource mapping of data to be transmitted onto a first symbol of an available transmission resource, a first subcarrier spacing, at least one target subcarrier, a number of IFFT points and a zero-setting length for the first symbol of the available transmission resource are determined according to a carrier spacing configuration factor and a second subcarrier spacing for a second symbol of the available transmission resource. The data to be transmitted is mapped to each of the at least one target subcarrier in a frequency domain. The data to be transmitted is modulated according to each of the at least one target subcarrier and the number of IFFT points to obtain a time-domain symbol. Foremost information of the zero-setting length in the time-domain symbol is set to 0 to obtain an output symbol. The output symbol is transmitted.

In the method for data transmission provided in the examples of the invention, during performing resource mapping of the data to be transmitted onto the first symbol of the available transmission resource, resource mapping is performed in the frequency domain using the first subcarrier spacing determined based on the carrier spacing configuration factor, and the foremost information of the zero-setting length in the time-domain symbol obtained by modulation is set to 0. When receiving the output symbol from the sending device, a receiving device does not process or perform statistics on the foremost information of the zero-setting length in the output symbol, and instead, modulates and processes remaining information in the output symbol except the zero-setting length to obtain the data to be transmitted, so that a function as GP is realized. Since a last symbol of each subframe contains information, the problem in the related art that the receiving device loses useful information of at least one symbol because no data is sent on the last symbol can be solved. The decoding performance can be improved, and the quality of service and the system performance can be improved.

It is to be noted that the method for data transmission provided in the examples of the invention may be applied to a 4G/5G-based C-V2X communication network. The sending device and receiving device involved in the invention may include, for example, a device like a vehicle-mounted device, a road-side unit, or a handheld device. The handheld device may include for example an electronic device like a smart phone, a notebook computer, or an intelligent wearable device. A network access device involved in the invention may include for example a communication device that provides wireless access service for a terminal, like a base station or a relay station.

Based on the above analysis, the following particular examples are proposed.

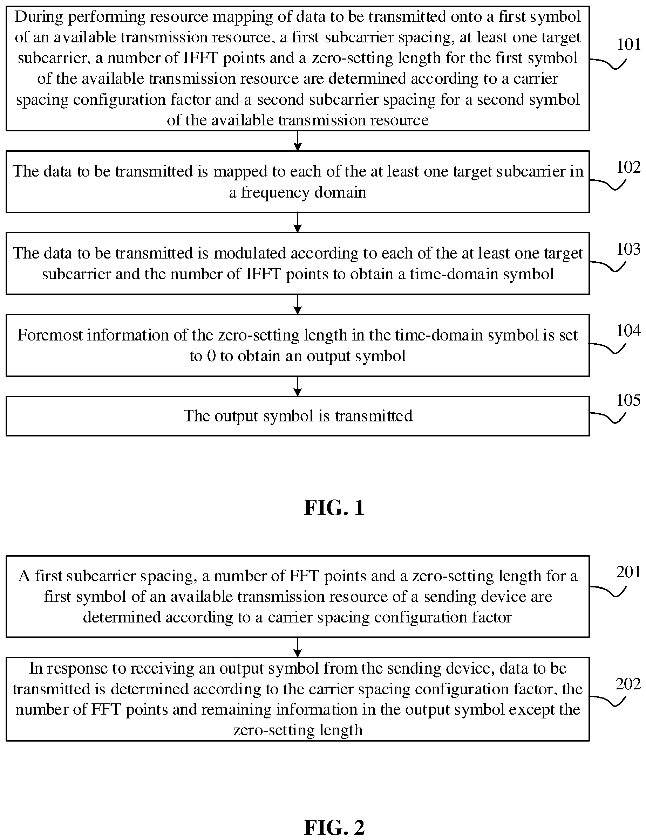

FIG. 1 illustrates a flow chart of a method for data transmission according to an example. An execution body of the method for data transmission may be a sending device. As illustrated in FIG. 1, the method includes the following Steps 101 to 105.

In Step 101, during performing resource mapping of data to be transmitted onto a first symbol of an available transmission resource, a first subcarrier spacing, at least one target subcarrier, a number of IFFT points and a zero-setting length for the first symbol of the available transmission resource are determined according to a carrier spacing configuration factor and a second subcarrier spacing for a second symbol of the available transmission resource.

Exemplarily, the data to be transmitted may include user data or a pilot signal. The available transmission resource refers to time-domain, frequency-domain, space-domain and code-domain practical physical transmission resources allocated to the sending device. The first symbol of the available transmission resource may be a first symbol sent by the sending device, or may be a first symbol in a time slot. The second subcarrier spacing for the second symbol of the available transmission resource may be a subcarrier spacing designated by a network access device upon resource allocation.

Exemplarily, an implementation of the operation that the sending device pre-obtains the carrier spacing configuration factor may include any one or combination of the following modes.
Mode 1: the network access device determines the carrier spacing configuration factor according to a coverage radius. The network access device sends first control signaling to the sending device, the first control signaling including the carrier spacing configuration factor. The sending device receives the first control signaling from the network access device, and parses the first control signaling to obtain the carrier spacing configuration factor. Optionally, the carrier spacing configuration factor is represented by a preset bit in the first control signaling.
Mode 2: a cluster header device in a cluster to which the sending device belongs determines the carrier spacing configuration factor according to a transmission distance. The cluster header device sends a second control signaling to the sending device, the second control signaling including the carrier spacing configuration factor. The sending device receives the second control signaling from the cluster header device in the cluster to which the sending device belongs, and parses the second control signaling to obtain the carrier spacing configuration factor. Optionally, the carrier spacing configuration factor is represented by a preset bit in the second control signaling.
   Exemplarily, if the sending device belongs to a cluster, the cluster header device in the cluster may determine the carrier spacing configuration factor according to the transmission distance, and notify the sending device of the carrier spacing configuration factor through the second control signaling. For example, the cluster may be a network composed of multiple devices, and the cluster header device may be a centralized control device selected from the multiple devices.
Mode 3: the sending device determines the carrier spacing configuration factor according to a processing capability of the sending device.

Optionally, the sending device may send a third control signaling to a receiving device after determining the carrier spacing configuration factor. The third control signaling includes the carrier spacing configuration factor. Optionally, the carrier spacing configuration factor is represented by a preset bit in the third control signaling.

In Step 102, the data to be transmitted is mapped to each of the at least one target subcarrier in a frequency domain.

In Step 103, the data to be transmitted is modulated according to each of the at least one target subcarrier and the number of IFFT points to obtain a time-domain symbol.

For example, Orthogonal Frequency Division Multiplexing (OFDM) modulation is performed on the data to be transmitted according to each of the at least one target subcarrier and the number of IFFT points to obtain the time-domain symbol.

In Step 104, foremost information of the zero-setting length in the time-domain symbol is set to 0 to obtain an output symbol.

Exemplarily, after the time-domain symbol is obtained by modulation, foremost bits of the zero-setting length in the first symbol of the time-domain symbol are set to 0, and zero-setting processing is not performed on any other symbol.

In Step 105, the output symbol is transmitted.

Exemplarily, when receiving the output symbol from the sending device, the receiving device does not process or perform statistics on the foremost information of the zero-setting length in the output symbol, and instead, demodulates and processes remaining information in the output symbol except the zero-setting length to obtain the data to be transmitted.

By means of the technical solution provided in the example of the invention, during performing resource mapping of the data to be transmitted onto the first symbol of the available transmission resource, resource mapping is performed in the frequency domain using the first subcarrier spacing determined based on the carrier spacing configuration factor, and the foremost information of the zero-setting length in the time-domain symbol obtained by modulation is set to 0. When receiving the output symbol from the sending device, a receiving device does not process or perform statistics on the foremost information of the zero-setting length in the output symbol, and instead, modulates and processes remaining information in the output symbol except the zero-setting length to obtain the data to be transmitted, so that a function as GP is realized. Since a last symbol of each subframe contains information, the problem in the related art that the receiving device loses useful information of at least one symbol because no data is sent on the last symbol can be solved. The decoding performance can be improved, and the quality of service and the system performance can be improved.

In an example, an implementation of the operation that the first subcarrier spacing, the at least one target subcarrier, the number of IFFT points and the zero-setting length for the first symbol of the available transmission resource are determined according to the carrier spacing configuration factor and the second subcarrier spacing for the second symbol of the available transmission resource may include that:

After the carrier spacing configuration factor and the second subcarrier spacing T2 for the second symbol of the available transmission resource are obtained, the first subcarrier spacing T1 for the first symbol of the available transmission resource is calculated based on a formula T1=T2*2ⁿ. T2 is the second subcarrier spacing for the second symbol of the available transmission resource, and n is the carrier spacing configuration factor. Each of the at least one target subcarrier is determined in the frequency domain of the first symbol of the available transmission resource according to the first subcarrier spacing for the first symbol of the available transmission resource. The number of IFFT points N1 for the first symbol of the available transmission resource is calculated based on a formula N1=N2/2ⁿ according to a number of IFFT points N2 for the second symbol of the available transmission resource. The zero-setting length L0 is calculated based on a formula L0=1-1/2ⁿ.

During particular implementation, the numerical value 2 in T1=T2*2ⁿ may be set in a protocol. Specifically, the calculation formula T1=T2*2ⁿ including the numerical value 2 may be set in codes executable for a processor of a terminal or the network access device.

In an example, based on present frequency spectrum planning, the carrier spacing configuration factor is equal to 1 when a carrier frequency band of the available transmission resource is greater than 6GHz; or, a value of the carrier spacing configuration factor may include 1, 2, or 3 when the carrier frequency band of the available transmission resource is less than 6GHz.

According to the present frequency spectrum planning, subcarrier spacings 60khz and 120khz may be scheduled by a system when the carrier frequency band is greater than 6GHz. Namely there is a double relationship only, and correspondingly, n is 1. Subcarrier spacings 15khz, 30khz, 60khz, and 120khz may be scheduled by the system when the carrier frequency band is below 6GHz. Namely there are double, quadruple and octuple relationships only, and correspondingly, n is 1, 2, or 3.

Exemplarily, when a value of the carrier spacing configuration factor may include 1, 2, or 3, the carrier spacing configuration factor may be represented by 2 bits. For example, '00' represents that the carrier spacing configuration factor is 1, '01' represents that the carrier spacing configuration factor is 2, and '11' represents that the carrier spacing configuration factor is 3.

FIG. 2 illustrates a flow chart of a method for data transmission according to an example. An execution body of the method for data transmission may be a receiving device. As illustrated in FIG. 2, the method includes the following Steps 201 to 202.

In Step 201, a first subcarrier spacing, a number of FFT points and a zero-setting length for a first symbol of an available transmission resource of a sending device are determined according to a carrier spacing configuration factor.

Exemplarily, an implementation of the operation that the receiving device pre-obtains the carrier spacing configuration factor may include any one or combination of the following modes.
Mode a: the sending device determines the carrier spacing configuration factor according to a processing capability of the sending device, and sends a third control signaling to the receiving device. The third control signaling includes the carrier spacing configuration factor. The receiving device receives the third control signaling from the sending device, and parses the third control signaling to obtain the carrier spacing configuration factor.
Mode b: a network access device determines the carrier spacing configuration factor according to a coverage radius. The network access device sends a fourth control signaling to the receiving device. The fourth control signaling includes the carrier spacing configuration factor. The receiving device receives the fourth control signaling from the network access device, and parses the fourth control signaling to obtain the carrier spacing configuration factor.
Mode c: a cluster header device in a cluster to which the sending device belongs determines the carrier spacing configuration factor according to a transmission distance, and sends a fifth control signaling to the receiving device. The fifth control signaling includes the carrier spacing configuration factor. The receiving device receives the fifth control signaling from the cluster header device in the cluster to which the sending device belongs, and parses the fifth control signaling to obtain the carrier spacing configuration factor.

In Step 202, in response to receiving an output symbol from the sending device, data to be transmitted is determined according to the carrier spacing configuration factor, the number of FFT points and remaining information in the output symbol except the zero-setting length.

By means of the technical solution provided in the examples of the invention, the carrier spacing configuration factor corresponding to the sending device is pre-obtained. When receiving the output symbol from the sending device, the receiving device does not process or perform statistics on the foremost information of the zero-setting length in the output symbol, and instead, modulates and processes remaining information in the output symbol except the zero-setting length, to obtain the data to be transmitted, so that a function as GP is realized. Since a last symbol of each subframe contains information, the problem in the related art that the receiving device loses useful information of at least one symbol because no data is sent on the last symbol can be solved. The decoding performance can be improved, and thus the quality of service and the system performance can be improved.

In an example, the operation in the abovementioned example that the first subcarrier spacing, the number of FFT points and the zero-setting length for the first symbol of the available transmission resource of the sending device are determined according to the carrier spacing configuration factor may include that:
By the formula T1=T2*2ⁿ, the first subcarrier spacing T1 for the first symbol of the available transmission resource of the sending device is calculated. T2 is a second subcarrier spacing for a second symbol of the available transmission resource of the sending device, and n is the carrier spacing configuration factor. By the formula N3=N4/2ⁿ, the number of FFT points N3 for the first symbol of the available transmission resource of the sending device is calculated according to a number of FFT points N4 for the second symbol of the available transmission resource of the sending device. The zero-setting length L0 is calculated based on a formula L0=1-1/2ⁿ.

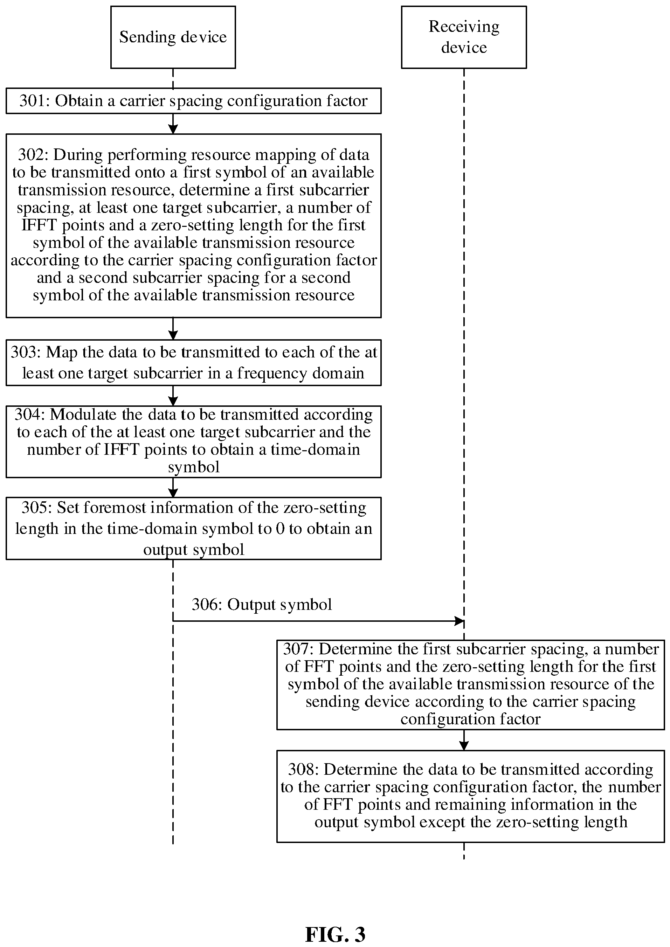

FIG. 3 illustrates a flow chart of a method for data transmission according to an example. A sending device and receiving device in a 4G/5G-based C-V2X communication network cooperate to implement the method. As illustrated in FIG. 3, based on the examples illustrated in FIG. 1 and FIG. 2, the method for data transmission involved in the invention may include the following Steps 301 to 307.

In Step 301, the sending device obtains a carrier spacing configuration factor.

In Step 302, during performing resource mapping of data to be transmitted onto a first symbol of an available transmission resource, the sending device determines a first subcarrier spacing, at least one target subcarrier, a number of IFFT points and a zero-setting length for the first symbol of the available transmission resource according to the carrier spacing configuration factor and a second subcarrier spacing for a second symbol of the available transmission resource.

In Step 303, the sending device maps the data to be transmitted to each of the at least one target subcarrier in a frequency domain.

In Step 304, the sending device modulates the data to be transmitted according to each of the at least one target subcarrier and the number of IFFT points to obtain a time-domain symbol.

In Step 305, the sending device sets foremost information of the zero-setting length in the time-domain symbol to 0 to obtain an output symbol.

In Step 306, the sending device transmits the output symbol.

In Step 307, the receiving device determines the first subcarrier spacing, a number of FFT points and the zero-setting length for the first symbol of the available transmission resource of the sending device according to the carrier spacing configuration factor.

In Step 308, when receiving the output symbol from the sending device, the receiving device determines the data to be transmitted according to the carrier spacing configuration factor, the number of FFT points and remaining information in the output symbol except the zero-setting length.

Exemplarily, the receiving device does not make statistics on the foremost information of the zero-setting length in the first symbol in the output symbol, and performs analog signal reception and/or Automatic Gain Control (AGC) operation and processing on the remaining information in the first symbol in the output symbol except the zero-setting length, and the other symbols of the output symbol to obtain the data to be transmitted. The number of FFT points for the first symbol of the output symbol is 1/2ⁿ times the number of FFT points for the second symbol. The number of FFT points for the second symbol is designated by a network access device upon resource allocation.

By means of the technical solution provided in the example of the invention, during performing resource mapping of the data to be transmitted onto the first symbol of the available transmission resource, the resource mapping is performed in the frequency domain using the first subcarrier spacing determined based on the carrier spacing configuration factor, and the foremost information of the zero-setting length in the time-domain symbol obtained by modulation is set to 0. When receiving the output symbol from the sending device, the receiving device does not process or perform statistics on the foremost information of the zero-setting length in the output symbol, and instead, modulates and processes the remaining information in the output symbol except the zero-setting length to obtain the data to be transmitted, so that a function as GP is realized. Since a last symbol of each subframe contains information, the problem in the related art that the receiving device loses useful information of at least one symbol because no data is sent on the last symbol can be solved. The decoding performance can be improved, and thus the quality of service and the system performance can be improved.

In an example, a processing process of a physical layer in a mobile communication system may include the following steps.

In Step 1), a Cyclic Redundancy Check (CRC) code is added to each transport block: for ensuring error detection of a channel, all data blocks sent by a Media Access Control (MAC) layer need to be added to a CRC code.

In Step 2), code block segmentation, and addition of CRC information to code block segments: for ensuring that the size of a code block is not greater than a threshold, for example, 6,144 bits, the transport block needs to be segmented; and for ensuring that the receiving device can stop erroneous decoding in advance, the CRC information is further added to each code block.

In Step 3), channel coding: a k-bit sequence is mapped to an m-bit sequence. The bits that have not been coded are referred to as original bits or source bits, and coded bits are referred to as codewords or codeword bits. Generally, m is more than or equal to k, and k/m is referred to as a code rate.

In Step 4), rate matching is performed: it is judged whether a practically transmitted physical resource is matched with the coded bits or not. If the practically transmitted physical resource is greater than the number of the coded bits, the coded bits need to be duplicated to a certain extent according to a certain rule. If the practically transmitted physical resource is less than the number of the coded bits, part of coded bits need to be removed, to enable that a transmission capability is matched with the transmitted data. An example of a rate matching process is as follows: if physical bearers presently allocated to the sending device (user) are 2 Resource Blocks (RBs), 12 subcarriers and 14 symbols on each RB, a modulation mode is Quadrature Phase Shift Keying (QPSK) modulation, and a single-port antenna is used for transmission, then 2*12*14*2=672 physical bearers are available at present, the data to be transmitted includes 70 bits after being coded. In such a case, the 70 bits need to be duplicated to be 672 bits according to a certain rule.

In Step 5), cascading of code blocks.

In Step 6), channel interleaving: for avoiding the influence of selective fading of the channel on information, the data to be transmitted needs to be interleaved.

In Step 7), mapping from a logical channel to a physical channel: during performing resource mapping of the data to be transmitted onto a first symbol of an available transmission resource, a first subcarrier spacing, at least one target subcarrier, a number of IFFT points and a zero-setting length for the first symbol of the available transmission resource are determined according to a carrier spacing configuration factor and a second subcarrier spacing for a second symbol of the available transmission resource. The data to be transmitted is mapped to each of the at least one target subcarrier in the frequency domain. A subcarrier spacing of the at least one target subcarrier is the first subcarrier spacing. The available transmission resource refers to time-domain, frequency-domain, space-domain and code-domain practical physical transmission resources allocated to the sending device. A value of the carrier spacing configuration factor n may be determined according to a carrier frequency band of the available transmission resource.

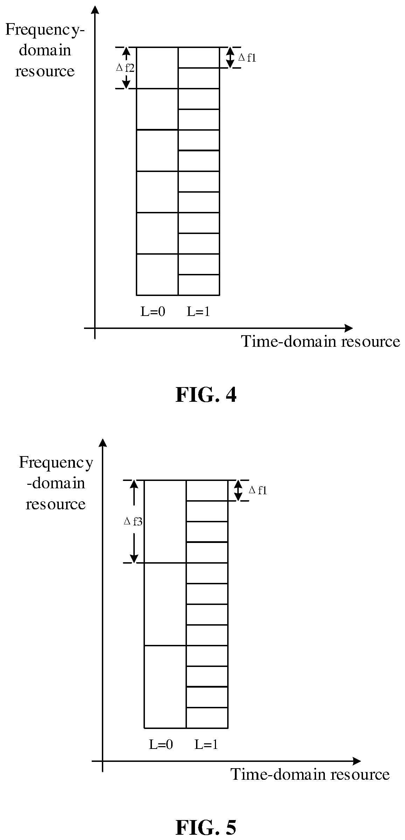

FIG. 4 to FIG. 6 illustrate schematic diagrams of frequency-domain resource mapping on a first symbol according to an example. There is made such a hypothesis that the carrier frequency band of the available transmission resource is less than 6GHz. FIG. 4 to FIG. 6 illustrate three different frequency-domain resource mapping manners respectively.

Referring to FIG. 4, the carrier spacing configuration factor n is equal to 1, and the first subcarrier spacing Δf2 for the first symbol (L=0) of the available transmission resource is 2¹ times, namely twice, of the second subcarrier spacing Δf1 for the second symbol (L=1) of the available transmission resource.

Referring to FIG. 5, the carrier spacing configuration factor n is equal to 2, and the first subcarrier spacing Δf3 for the first symbol (L=0) of the available transmission resource is 2² times, namely four times, of the second subcarrier spacing Δf1 for the second symbol (L=1) of the available transmission resource.

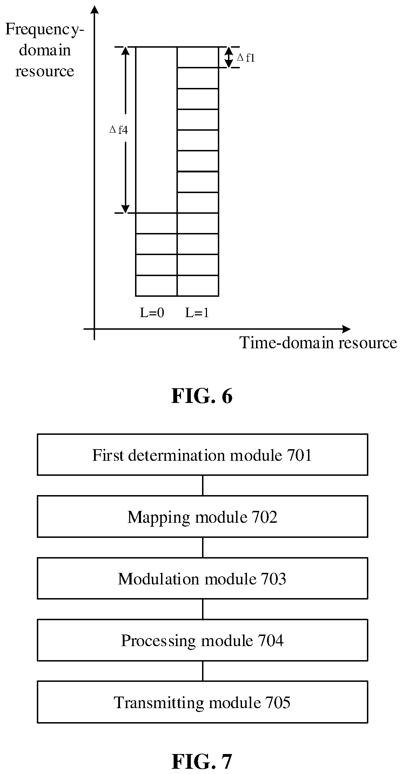

Referring to FIG. 6, the carrier spacing configuration factor n is equal to 3, and the first subcarrier spacing Δf4 for the first symbol (L=0) of the available transmission resource is 2³ times, namely eight times, of the second subcarrier spacing Δf1 for the second symbol (L=1) of the available transmission resource.

In Step 8), OFDM modulation is performed, and a Cyclic Prefix (CP) is added: OFDM modulation is performed on the data to be transmitted according to each of the at least one target subcarrier and the number of IFFT points to obtain a time-domain symbol. During transformation to a time domain, the number of IFFT points for the first symbol is 1/2ⁿ times that for the second symbol. A foremost (1-1/2ⁿ) length of information in the time-domain symbol is set to 0 to obtain an output symbol.

In Step 9), parallel-to-serial conversion: parallel-to-serial conversion is completed, and the output symbol is transmitted according to a time sequence.

The receiving device pre-obtains a mapping manner for the first symbol of the available transmission resource of the sending device. The receiving device does not make statistics on the foremost (1-1/2ⁿ) length of information in the output symbol, and only performs analog signal reception and/or AGC operation and processing on remaining information in the first symbol in the output symbol except the foremost (1-1/2ⁿ) length of information and performs analog signal reception on other subsequently received symbols in the output symbol. A number of FFT points for the first symbol corresponding to the output symbol is 1/2n times that for the second symbol, thereby realizing a function as GP. Since a last symbol of each subframe contains information, the problem in the related art that the receiving device loses useful information of at least one symbol because no data is sent on the last symbol can be solved, and the decoding performance and the system performance can be improved.

The below is an apparatus example of the invention, which may be used to execute the method example of the invention. Parts that are not described in detail in the apparatus example may refer to the method example.

FIG. 7 illustrates a block diagram of an apparatus for data transmission according to an example. The apparatus may be applied to a sending device. Referring to FIG. 7, the apparatus for data transmission includes a first determination module 701, a mapping module 702, a modulation module 703, a processing module 704 and a transmitting module 705.

The first determination module 701 is configured to: during performing resource mapping of data to be transmitted onto a first symbol of an available transmission resource, determine a first subcarrier spacing, at least one target subcarrier, a number of inverse fast fourier transform (IFFT) points and a zero-setting length for the first symbol of the available transmission resource, according to a carrier spacing configuration factor and a second subcarrier spacing for a second symbol of the available transmission resource.

The mapping module 702 is configured to map, in a frequency domain, the data to be transmitted to each of the at least one target subcarrier.

The modulation module 703 is configured to modulate the data to be transmitted according to each of the at least one target subcarrier and the number of IFFT points to obtain a time-domain symbol.

The processing module 704 is configured to set foremost information of the zero-setting length in the time-domain symbol to 0 to obtain an output symbol.

The transmitting module 705 is configured to transmit the output symbol.

By means of the apparatus provided in the example of the invention, during performing resource mapping of the data to be transmitted onto the first symbol of the available transmission resource, resource mapping is performed in the frequency domain using the first subcarrier spacing determined based on the carrier spacing configuration factor, and the foremost information of the zero-setting length in the time-domain symbol obtained by modulation is set to 0. When receiving the output symbol from the sending device, a receiving device does not process or perform statistics on the foremost information of the zero-setting length in the output symbol, and instead, modulates and processes remaining information in the output symbol except the zero-setting length to obtain the data to be transmitted, so that a function as GP is realized. Since a last symbol of each subframe contains information, the problem that the receiving device loses useful information of at least one symbol because no data is sent on the last symbol can be solved. The decoding performance can be improved, and the quality of service and the system performance can be improved.

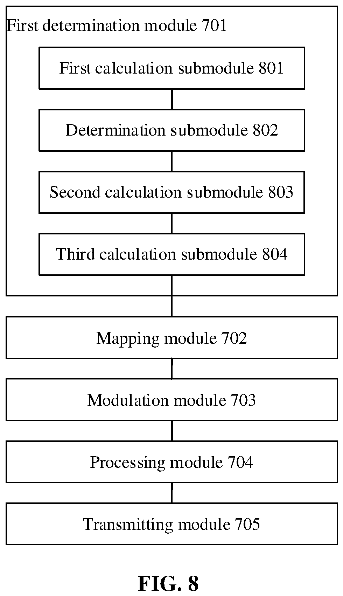

In an example, as illustrated in FIG. 8, in the apparatus for data transmission of in FIG. 7, the first determination module 701 may be further configured to include a first calculation submodule 801, a determination submodule 802, a second calculation submodule 803 and a third calculation submodule 804.

The first calculation submodule 801 is configured to calculate, based on a formula T1=T2*2ⁿ, the first subcarrier spacing T1 for the first symbol of the available transmission resource. T2 is the second subcarrier spacing for the second symbol of the available transmission resource, and n is the carrier spacing configuration factor

The determination submodule 802 is configured to determine each of the at least one target subcarrier in the frequency domain of the first symbol of the available transmission resource according to the first subcarrier spacing for the first symbol of the available transmission resource.

The second calculation submodule 803 is configured to calculate, based on a formula N1=N2/2ⁿ, the number of IFFT points N1 for the first symbol of the available transmission resource according to a number of IFFT points N2 for the second symbol of the available transmission resource.

The third calculation submodule 804 is configured to calculate, based on a formula L0=1-1/2ⁿ, the zero-setting length L0.

In an example, the carrier spacing configuration factor is equal to 1 in response to that a carrier frequency band of the available transmission resource is greater than 6GHz; or a value of the carrier spacing configuration factor includes 1, 2, or 3 in response to that the carrier frequency band of the available transmission resource is less than 6GHz.

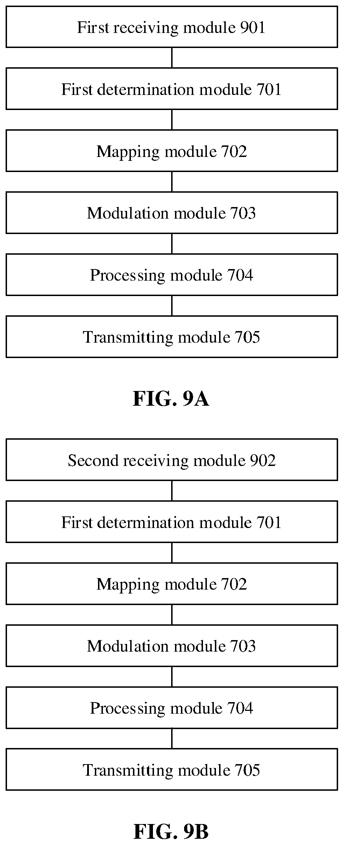

In an example, as illustrated in FIG. 9A, the apparatus for data transmission of in FIG. 7 may further include a first receiving module 901. The first receiving module 901 is configured to receive a first control signaling sent by a network access device and parse the first control signaling to obtain the carrier spacing configuration factor.

In an example, as illustrated in FIG. 9B, the apparatus for data transmission of in FIG. 7 may further include a second receiving module 902. The second receiving module 902 is configured to receive a second control signaling from a cluster header device in a cluster to which the sending device belongs, and parse the second control signaling to obtain the carrier spacing configuration factor.

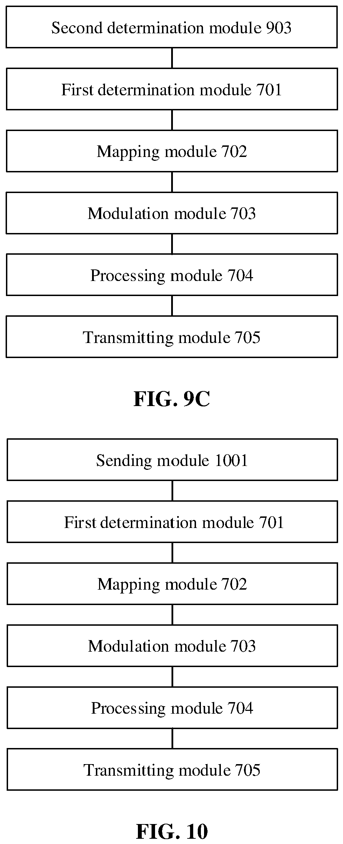

In an example, as illustrated in FIG. 9C, the apparatus for data transmission of in FIG. 7 may further include a second determination module 903. The second determination module 903 is configured to determine the carrier spacing configuration factor according to a processing capability of the sending device.

In an example, as illustrated in FIG. 10, the apparatus for data transmission of in FIG. 7 may further include a sending module 1001.

The sending module 1001 is configured to send a third control signaling to a receiving device. The third control signaling includes the carrier spacing configuration factor.

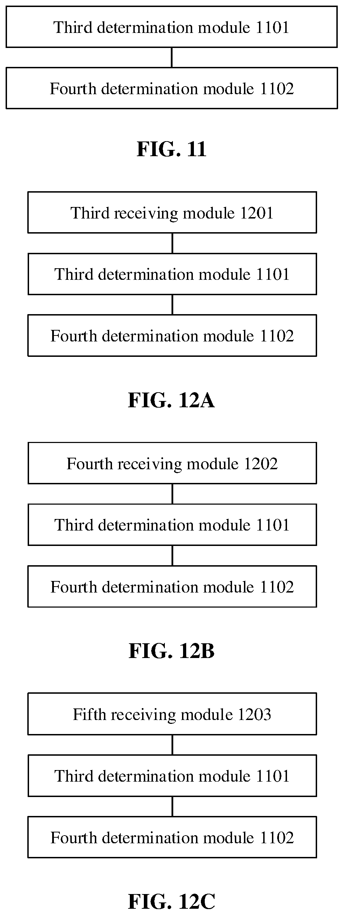

FIG. 11 illustrates a block diagram of an apparatus for data transmission according to an example. The apparatus may be applied to a receiving device. Referring to FIG. 11, the apparatus for data transmission includes a third determination module 1101 and a fourth determination module 1102.

The third determination module 1001 is configured to determine a first subcarrier spacing, a number of fast fourier transform (FFT) points and a zero-setting length for a first symbol of an available transmission resource of a sending device, according to a carrier spacing configuration factor.

The fourth determination module 1102 is configured to: in response to receiving an output symbol from the sending device, determine data to be transmitted according to the carrier spacing configuration factor, the number of FFT points and remaining information in the output symbol except the zero-setting length.

In an example, as illustrated in FIG. 12A, the apparatus for data transmission of FIG. 11 may further include a third receiving module 1201. The third receiving module 1201 is configured to receive a third control signaling from the sending device, and parse the third control signaling to obtain the carrier spacing configuration factor.

In an example, as illustrated in FIG. 12B, the apparatus for data transmission of FIG. 11 may further include a fourth receiving module 1202. The fourth receiving module 1202 is configured to receive a fourth control signaling from a network access device, and parse the fourth control signaling to obtain the carrier spacing configuration factor.

In an example, as illustrated in FIG. 12C, the apparatus for data transmission of in FIG. 11 may further include a fifth receiving module 1203. The fifth receiving module 1203 is configured to receive a fifth control signaling from a cluster header device in a cluster to which the receiving device belongs, and parse the fifth control signaling to obtain the carrier spacing configuration factor.

In an example, the third determination module 1101 is configured to: calculate, based on a formula T1=T2*2ⁿ, the first subcarrier spacing T1 for the first symbol of the available transmission resource of the sending device, with T2 being a second subcarrier spacing for a second symbol of the available transmission resource of the sending device, and n being the carrier spacing configuration factor; calculate, based on a formula N3=N4/2ⁿ, the number of FFT points N3 for the first symbol of the available transmission resource of the sending device according to a number of FFT points N4 for the second symbol of the available transmission resource of the sending device; and calculate, based on a formula L0=1-1/2ⁿ, the zero-setting length L0.

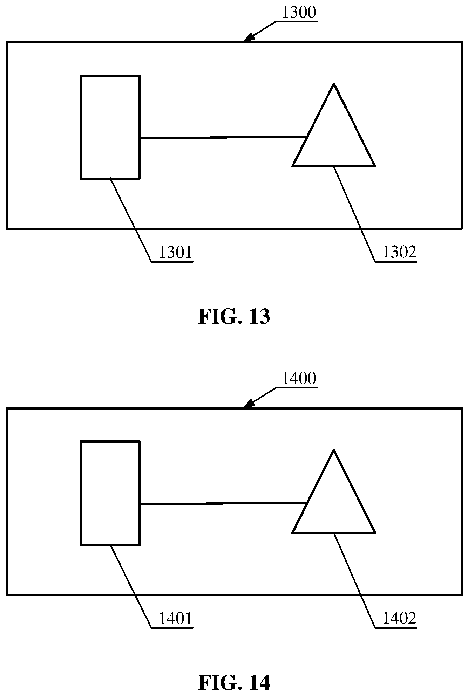

FIG. 13 illustrates a block diagram of an apparatus 1300 for data transmission according to an example. The apparatus 1300 for data transmission is applied to a sending device, and includes: a processor 1301; and a memory 1302 configured to store instructions executable for the processor.

The processor 1301 is configured to: during performing resource mapping of data to be transmitted onto a first symbol of an available transmission resource, determine a first subcarrier spacing, at least one target subcarrier, a number of inverse fast fourier transform (IFFT) points and a zero-setting length for the first symbol of the available transmission resource, according to a carrier spacing configuration factor and a second subcarrier spacing for a second symbol of the available transmission resource; map, in a frequency domain, the data to be transmitted to each of the at least one target subcarrier; modulate the data to be transmitted according to each of the at least one target subcarrier and the number of IFFT points to obtain a time-domain symbol; set foremost information of the zero-setting length in the time-domain symbol to 0 to obtain an output symbol; and transmit the output symbol.

In an example, the processor 1301 may be further configured to: calculate, based on a formula T1=T2*2ⁿ, the first subcarrier spacing T1 for the first symbol of the available transmission resource, with T2 being the second subcarrier spacing for the second symbol of the available transmission resource, and n being the carrier spacing configuration factor; determine each of the at least one target subcarrier in the frequency domain of the first symbol of the available transmission resource according to the first subcarrier spacing for the first symbol of the available transmission resource; calculate, based on a formula N1=N2/2ⁿ, the number of IFFT points N1 for the first symbol of the available transmission resource according to a number of IFFT points N2 for the second symbol of the available transmission resource; and calculate, based on a formula L0=1-1/2ⁿ, the zero-setting length L0.

In an example, the carrier spacing configuration factor is equal to 1 in response to that a carrier frequency band of the available transmission resource is greater than 6GHz; or a value of the carrier spacing configuration factor includes 1, 2, or 3 in response to that the carrier frequency band of the available transmission resource is less than 6GHz.

In an example, the processor 1301 may be further configured to perform one of following acts: receiving a first control signaling from a network access device, and parsing the first control signaling to obtain the carrier spacing configuration factor; receiving a second control signaling from a cluster header device in a cluster to which the sending device belongs, and parsing the second control signaling to obtain the carrier spacing configuration factor; or determining the carrier spacing configuration factor according to a processing capability of the sending device.

In an example, the processor 1301 may be further configured to: send a third control signaling to a receiving device, the third control signaling including the carrier spacing configuration factor.

FIG. 14 illustrates a block diagram of an apparatus 1400 for data transmission according to an example. The apparatus 1400 for data transmission is applied to a receiving device, and includes: a processor 1401; and a memory 1402 configured to store an instruction executable for the processor.

The processor 1401 is configured to: determine a first subcarrier spacing, a number of fast fourier transform (FFT) points and a zero-setting length for a first symbol of an available transmission resource of a sending device, according to a carrier spacing configuration factor; and in response to receiving an output symbol from the sending device, determine data to be transmitted according to the carrier spacing configuration factor, the number of FFT points and remaining information in the output symbol except the zero-setting length.

In an example, the processor 1401 may be further configured to perform one of following acts: receiving a third control signaling from the sending device, and parse the third control signaling to obtain the carrier spacing configuration factor; receiving a fourth control signaling from a network access device, and parse the fourth control signaling to obtain the carrier spacing configuration factor; or receiving a fifth control signaling from a cluster header device in a cluster to which the receiving device belongs, and parsing the fifth control signaling to obtain the carrier spacing configuration factor.

In an example, the processor 1401 may be further configured to: calculate, based on a formula T1=T2*2ⁿ, the first subcarrier spacing T1 for the first symbol of the available transmission resource of the sending device, with T2 being a second subcarrier spacing for a second symbol of the available transmission resource of the sending device, and n being the carrier spacing configuration factor; calculate, based on a formula N3=N4/2ⁿ, the number of FFT points N3 for the first symbol of the available transmission resource of the sending device according to a number of FFT points N4 for the second symbol of the available transmission resource of the sending device; and calculate, based on a formula L0=1-1/2ⁿ, the zero-setting length L0.

With respect to the apparatuses in the above examples, the specific manners for performing operations for individual modules therein have been described in detail in the examples regarding the methods, which will not be elaborated herein.

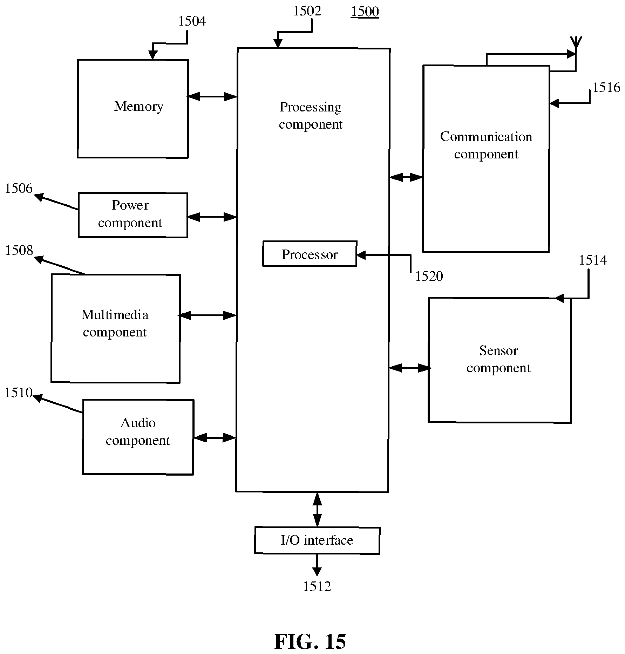

FIG. 15 illustrates a block diagram of an apparatus for data transmission according to an example. The apparatus 1500 for data transmission is applied to a sending device. The apparatus 1500 for data transmission may include one or more of the following components: a processing component 1502, a memory 1504, a power component 1506, a multimedia component 1508, an audio component 1510, an input/output (I/O) interface 1512, a sensor component 1514, and a communication component 1516.

The processing component 1502 typically controls overall operations of the apparatus 1500 for data transmission, such as the operations associated with display, telephone calls, data communications, camera operations, and recording operations. The processing component 1502 may include one or more processors 1520 to execute instructions to perform all or part of the steps in the abovementioned method. Moreover, the processing component 1502 may include one or more modules which facilitate interaction between the processing component 1502 and the other components. For instance, the processing component 1502 may include a multimedia module to facilitate interaction between the multimedia component 1508 and the processing component 1502.

The memory 1504 is configured to store various types of data to support the operation of the apparatus 1500 for data transmission. Examples of such data include instructions for any applications or methods operated on the apparatus 1500 for data transmission, contact data, phonebook data, messages, pictures, video, etc. The memory 1504 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 1506 provides power for various components of the apparatus 1500 for data transmission. The power component 1506 may include a power management system, one or more power supplies, and other components associated with generation, management and distribution of power for the apparatus 1500 for data transmission.

The multimedia component 1508 includes a screen providing an output interface between the apparatus 1500 for data transmission and a user. In some examples, the screen may include a Liquid Crystal Display (LCD) and a Touch Panel (TP). If the screen includes the TP, the screen may be implemented as a touch screen to receive input signals from the user. The TP includes one or more touch sensors to sense touches, swipes, and gestures on the TP. The touch sensors may not only sense a boundary of a touch or swipe action, but also sense a duration and pressure associated with the touch or swipe action. In some examples, the multimedia component 1508 includes a front camera and/or a rear camera. The front camera and/or the rear camera may receive external multimedia data when the apparatus 1500 for data transmission is in an operating mode, such as a photographing mode or a video mode. Each of the front camera and the rear camera may be a fixed optical lens system or have focusing and optical zooming capabilities.

The audio component 1510 is configured to output and/or input an audio signal. For example, the audio component 1510 includes a Microphone (MIC), and the MIC is configured to receive an external audio signal when the apparatus 1500 for data transmission is in the operating mode, such as a call mode, a recording mode and a voice recognition mode. The received audio signal may be further stored in the memory 1504 or sent through the communication component 1516. In some examples, the audio component 1510 further includes a speaker configured to output the audio signal.

The I/O interface 1512 provides an interface between the processing component 1502 and a peripheral interface module, and the peripheral interface module may be a keyboard, a click wheel, a button and the like. The button may include, but not limited to: a home button, a volume button, a start button and a lock button.

The sensor component 1514 includes one or more sensors configured to provide status assessment in various aspects for the apparatus 1500 for data transmission. For instance, the sensor component 1514 may detect an on/off status of the apparatus 1500 for data transmission and relative positioning of components, such as a display and small keyboard of the apparatus 1500 for data transmission, and the sensor component 1514 may further detect a change in a position of the apparatus 1500 for data transmission or a component of the apparatus 1500 for data transmission, presence or absence of contact between the user and the apparatus 1500 for data transmission, orientation or acceleration/deceleration of the apparatus 1500 for data transmission and a change in temperature of the apparatus 1500 for data transmission. The sensor component 1514 may include a proximity sensor configured to detect presence of an object nearby without any physical contact. The sensor component 1514 may also include a light sensor, such as a Complementary Metal Oxide Semiconductor (CMOS) or Charge Coupled Device (CCD) image sensor, configured for use in an imaging application. In some examples, the sensor component 1514 may also include an acceleration sensor, a gyroscope sensor, a magnetic sensor, a pressure sensor or a temperature sensor.

The communication component 1516 is configured to facilitate wired or wireless communication between the apparatus 1500 for data transmission and another device. The apparatus 1500 for data transmission may access a communication standard based wireless network, such as Wireless Fidelity (WiFi), 2nd-Generation (2G), 3G, 4G, 5G, or a combination thereof, or an intercom network. In an example, the communication component 1516 receives a broadcast signal or broadcast associated information from an external broadcast management system through a broadcast channel. In an example, the communication component 1516 further includes a Near Field Communication (NFC) module to facilitate short-range communication. For example, the NFC module may be implemented based on a Radio Frequency Identification (RFID) technology, an Infrared Data Association (IrDA) technology, an Ultra Wide Band (UWB) technology, a Bluetooth (BT) technology and another technology.

In an example, the apparatus 1500 for data transmission may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an example, there is also provided a non-transitory computer-readable storage medium including instructions, such as the memory 1504 including instructions, and the instructions may be executed by the processor 1520 of the apparatus 1500 for data transmission to implement the abovementioned method. For example, the non-transitory computer-readable storage medium may be a ROM, a Random Access Memory (RAM), a Compact Disc Read-Only Memory (CD-ROM), a magnetic tape, a floppy disc, an optical data storage device and the like.

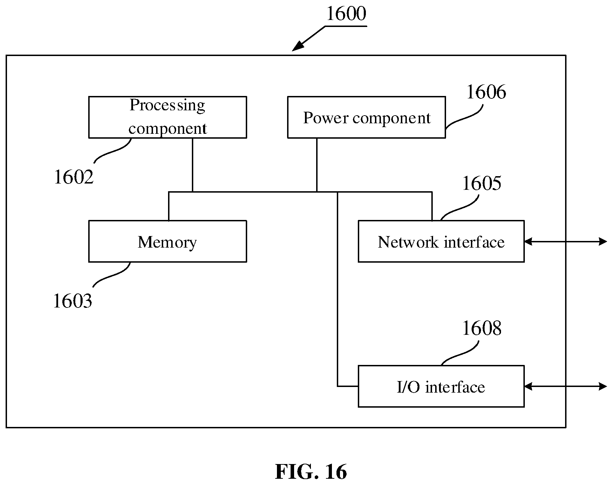

FIG. 16 illustrates a block diagram of an apparatus for data transmission according to an example. For example, the apparatus 1600 for data transmission may be provided as a server. The apparatus 1600 for data transmission includes a processing component 1602, further including one or more processors, and includes a memory resource represented by a memory 1603. The memory is configured to store instructions executable for the processing component 1602, for example, an application program. The application program stored in the memory 1603 may include one or more modules of which each corresponds to a set of instructions. In addition, the processing component 1602 is configured to execute the instructions to execute the abovementioned method.

The apparatus 1600 for data transmission may further include a power component 1606 configured to execute power management of the apparatus 1600 for data transmission, a wired or wireless network interface 1605 configured to connect the apparatus 1600 for data transmission to a network, and an I/O interface 1608. The apparatus 1600 for data transmission may be operated based on an operating system stored in the memory 1603, for example, Windows ServerTM, Max OS XTM, UnixTM, LinuxTM, FreeBSDTM, or the like.

There is provided a non-transitory computer-readable storage medium. For example, the non-transitory computer-readable storage medium may be a ROM, a RAM, a CD-ROM, a magnetic tape, a floppy disk, and an optical data storage device. When instructions in the storage medium are executed by the apparatus 1500 for data transmission or the apparatus 1600 for data transmission, the apparatus 1500 for data transmission or the apparatus 1600 for data transmission is enabled to execute the following method. The method including that:
during performing resource mapping of data to be transmitted onto a first symbol of an available transmission resource, a first subcarrier spacing, at least one target subcarrier, a number of inverse fast fourier transform (IFFT) points and a zero-setting length for the first symbol of the available transmission resource are determined according to a carrier spacing configuration factor and a second subcarrier spacing for a second symbol of the available transmission resource; the data to be transmitted is mapped, in a frequency domain, to each of the at least one target subcarrier; the data to be transmitted is modulated according to each of the at least one target subcarrier and the number of IFFT points to obtain a time-domain symbol; foremost information of the zero-setting length in the time-domain symbol is set to 0 to obtain an output symbol; and the output symbol is transmitted.

In an example, the operation that the first subcarrier spacing, the at least one target subcarrier, the number of inverse fast fourier transform (IFFT) points and the zero-setting length for the first symbol of the available transmission resource are determined according to the carrier spacing configuration factor and the second subcarrier spacing for the second symbol of the available transmission resource include the following. The first subcarrier spacing T1 for the first symbol of the available transmission resource is calculated based on a formula T1=T2*2ⁿ. T2 is the second subcarrier spacing for the second symbol of the available transmission resource, and n is the carrier spacing configuration factor. Each of the at least one target subcarrier is determined in the frequency domain of the first symbol of the available transmission resource according to the first subcarrier spacing for the first symbol of the available transmission resource. The number of IFFT points N1 for the first symbol of the available transmission resource is determined based on a formula N1=N2/2ⁿ according to a number of IFFT points N2 for the second symbol of the available transmission resource. The zero-setting length L0 is calculated based on a formula L0=1-1/2°.

In an example, the carrier spacing configuration factor is equal to 1 in response to that a carrier frequency band of the available transmission resource is greater than 6GHz; or a value of the carrier spacing configuration factor includes 1, 2, or 3 in response to that the carrier frequency band of the available transmission resource is less than 6GHz.

In an example, the method further includes one of following acts: receiving a first control signaling from a network access device, and parsing the first control signaling to obtain the carrier spacing configuration factor; receiving a second control signaling from a cluster header device in a cluster to which the sending device belongs, and parsing the second control signaling to obtain the carrier spacing configuration factor; or determining the carrier spacing configuration factor according to a processing capability of the sending device.

In an example, the method further includes: sending a third control signaling to a receiving device, the third control signaling including the carrier spacing configuration factor.

Other implementation solutions of the invention will be apparent to those skilled in the art from consideration of the specification and practice of the invention. This application is intended to cover any variations, uses, or adaptations of the invention following the general principles thereof and including such departures from the invention as come within known or customary practice in the art. It is intended that the specification and examples be considered as exemplary only, with a true scope and spirit of the disclosure being indicated by the appended claims.

It will be appreciated that the invention is not limited to the exact construction that has been described above and illustrated in the accompanying drawings, and that various modifications and changes may be made without departing from the scope thereof. It is intended that the scope of the invention only be limited by the appended claims.

## Claims

1. A method for data transmission, applied to a sending device and comprising:
during performing resource mapping of data to be transmitted onto a first symbol of an available transmission resource, determining a first subcarrier spacing, at least one target subcarrier, a number of inverse fast fourier transform (IFFT) points and a zero-setting length for the first symbol of the available transmission resource, according to a carrier spacing configuration factor and a second subcarrier spacing for a second symbol of the available transmission resource;
mapping, in a frequency domain, the data to be transmitted to each of the at least one target subcarrier;
modulating the data to be transmitted according to each of the at least one target subcarrier and the number of IFFT points to obtain a time-domain symbol;
setting foremost information of the zero-setting length in the time-domain symbol to 0 to obtain an output symbol; and
transmitting the output symbol.

2. The method of claim 1, wherein determining the first subcarrier spacing, the at least one target subcarrier, the number of inverse fast fourier transform (IFFT) points and the zero-setting length for the first symbol of the available transmission resource, according to the carrier spacing configuration factor and the second subcarrier spacing for the second symbol of the available transmission resource comprises:
calculating, based on a formula T1=T2*2ⁿ, the first subcarrier spacing T1 for the first symbol of the available transmission resource, wherein T2 is the second subcarrier spacing for the second symbol of the available transmission resource, and n is the carrier spacing configuration factor;
determining each of the at least one target subcarrier in the frequency domain of the first symbol of the available transmission resource according to the first subcarrier spacing for the first symbol of the available transmission resource;
calculating, based on a formula N1=N2/2ⁿ, the number of IFFT points N1 for the first symbol of the available transmission resource according to a number of IFFT points N2 for the second symbol of the available transmission resource; and
calculating, based on a formula L0=1-1/2ⁿ, the zero-setting length L0.

3. The method of claim 1, wherein the carrier spacing configuration factor is equal to 1 in response to that a carrier frequency band of the available transmission resource is greater than 6GHz; or
a value of the carrier spacing configuration factor comprises 1, 2, or 3 in response to that the carrier frequency band of the available transmission resource is less than 6GHz.

4. The method of claim 1, further comprising one of following acts:
receiving a first control signaling from a network access device, and parsing the first control signaling to obtain the carrier spacing configuration factor;
receiving a second control signaling from a cluster header device in a cluster to which the sending device belongs, and parsing the second control signaling to obtain the carrier spacing configuration factor; or
determining the carrier spacing configuration factor according to a processing capability of the sending device.

5. The method of claim 1, further comprising:
sending a third control signaling to a receiving device, the third control signaling comprising the carrier spacing configuration factor.

6. A method for data transmission, applied to a receiving device and comprising:
determining a first subcarrier spacing, a number of fast fourier transform (FFT) points and a zero-setting length for a first symbol of an available transmission resource of a sending device according to a carrier spacing configuration factor; and
in response to receiving an output symbol from the sending device, determining data to be transmitted according to the carrier spacing configuration factor, the number of FFT points and remaining information in the output symbol except the zero-setting length.

7. The method of claim 6, further comprising one of following acts:
receiving a third control signaling from the sending device, and parsing the third control signaling to obtain the carrier spacing configuration factor;
receiving a fourth control signaling from a network access device, and parsing the fourth control signaling to obtain the carrier spacing configuration factor; or
receiving a fifth control signaling from a cluster header device in a cluster to which the receiving device belongs, and parsing the fifth control signaling to obtain the carrier spacing configuration factor.

8. The method of claim 6, wherein determining the first subcarrier spacing, the number of fast fourier transform (FFT) points and the zero-setting length for the first symbol of the available transmission resource of the sending device according to the carrier spacing configuration factor comprises:
calculating, based on a formula T1=T2*2ⁿ, the first subcarrier spacing T1 for the first symbol of the available transmission resource of the sending device, wherein T2 is a second subcarrier spacing for a second symbol of the available transmission resource of the sending device, and n is the carrier spacing configuration factor;
calculating, based on a formula N3=N4/2ⁿ, the number of FFT points N3 for the first symbol of the available transmission resource of the sending device according to a number of FFT points N4 for the second symbol of the available transmission resource of the sending device; and
calculating, based on a formula L0=1-1/2ⁿ, the zero-setting length L0.

9. An apparatus for data transmission, comprising:
a first determination module, configured to: during performing resource mapping of data to be transmitted onto a first symbol of an available transmission resource, determine a first subcarrier spacing, at least one target subcarrier, a number of inverse fast fourier transform (IFFT) points and a zero-setting length for the first symbol of the available transmission resource, according to a carrier spacing configuration factor and a second subcarrier spacing for a second symbol of the available transmission resource;
a mapping module, configured to map, in a frequency domain, the data to be transmitted to each of the at least one target subcarrier;
a modulation module, configured to modulate the data to be transmitted according to each of the at least one target subcarrier and the number of IFFT points to obtain a time-domain symbol;
a processing module, configured to set foremost information of the zero-setting length in the time-domain symbol to 0 to obtain an output symbol; and
a transmitting module, configured to transmit the output symbol.

10. The apparatus of claim 9, wherein the first determination module comprises:
a first calculation submodule, configured to calculate, based on a formula T1=T2∗2ⁿ, the first subcarrier spacing T1 for the first symbol of the available transmission resource, wherein T2 is the second subcarrier spacing for the second symbol of the available transmission resource, and n is the carrier spacing configuration factor;
a determination submodule, configured to determine each of the at least one target subcarrier in the frequency domain of the first symbol of the available transmission resource according to the first subcarrier spacing for the first symbol of the available transmission resource;
a second calculation submodule, configured to calculate, based on a formula N1=N2/2ⁿ, the number of IFFT points N1 for the first symbol of the available transmission resource according to a number of IFFT points N2 for the second symbol of the available transmission resource; and
a third calculation submodule, configured to calculate, based on a formula L0=1-1/2ⁿ, the zero-setting length L0.

11. The apparatus of claim 9, wherein the carrier spacing configuration factor is equal to 1 in response to that a carrier frequency band of the available transmission resource is greater than 6GHz; or
a value of the carrier spacing configuration factor comprises 1, 2, or 3 in response to that the carrier frequency band of the available transmission resource is less than 6GHz.

12. The apparatus of claim 9, further comprising one of following:
a first receiving module, configured to receive a first control signaling from a network access device, and parse the first control signaling to obtain the carrier spacing configuration factor;
a second receiving module, configured to receive a second control signaling from a cluster header device in a cluster to which the sending device belongs, and parse the second control signaling to obtain the carrier spacing configuration factor; or
a second determination module, configured to determine the carrier spacing configuration factor according to a processing capability of the sending device.

13. The apparatus of claim 9, further comprising:
a sending module, configured to send a third control signaling to a receiving device, the third control signaling comprising the carrier spacing configuration factor.

14. An apparatus for data transmission, comprising:
a third determination module, configured to determine a first subcarrier spacing, a number of fast fourier transform (FFT) points and a zero-setting length for a first symbol of an available transmission resource of a sending device according to a carrier spacing configuration factor; and
a fourth determination module, configured to: in response to receiving an output symbol from the sending device, determine data to be transmitted according to the carrier spacing configuration factor, the number of FFT points and remaining information in the output symbol except the zero-setting length.

15. The apparatus of claim 14, further comprising one of following:
a third receiving module, configured to receive a third control signaling from the sending device, and parse the third control signaling to obtain the carrier spacing configuration factor;
a fourth receiving module, configured to receive a fourth control signaling from a network access device, and parse the fourth control signaling to obtain the carrier spacing configuration factor; or
a fifth receiving module, configured to receive a fifth control signaling from a cluster header device in a cluster to which the receiving device belongs, and parse the fifth control signaling to obtain the carrier spacing configuration factor.

16. The apparatus of claim 14, wherein the third determination module is configured to:
calculate, based on a formula T1=T2*2ⁿ, the first subcarrier spacing T1 for the first symbol of the available transmission resource of the sending device, wherein T2 is a second subcarrier spacing for a second symbol of the available transmission resource of the sending device, and n is the carrier spacing configuration factor;
calculate, based on a formula N3=N4/2ⁿ, the number of FFT points N3 for the first symbol of the available transmission resource of the sending device according to a number of FFT points N4 for the second symbol of the available transmission resource of the sending device; and
calculate, based on a formula L0=1-1/2ⁿ, the zero-setting length L0.

17. An apparatus for data transmission, comprising:
a processor; and
a memory configured to store instructions executable for the processor,
wherein the processor is configured to:
during performing resource mapping of data to be transmitted onto a first symbol of an available transmission resource, determine a first subcarrier spacing, at least one target subcarrier, a number of inverse fast fourier transform (IFFT) points and a zero-setting length for the first symbol of the available transmission resource, according to a carrier spacing configuration factor and a second subcarrier spacing for a second symbol of the available transmission resource;
map, in a frequency domain, the data to be transmitted to each of the at least one target subcarrier;
modulate the data to be transmitted according to each of the at least one target subcarrier and the number of IFFT points to obtain a time-domain symbol;
set foremost information of the zero-setting length in the time-domain symbol to 0 to obtain an output symbol; and
transmit the output symbol.

18. An apparatus for data transmission, comprising:
a processor; and
a memory configured to store instructions executable for the processor,
wherein the processor is configured to:
determine a first subcarrier spacing, a number of fast fourier transform (FFT) points and a zero-setting length for a first symbol of an available transmission resource of a sending device according to a carrier spacing configuration factor; and
in response to receiving an output symbol from the sending device, determine data to be transmitted according to the carrier spacing configuration factor, the number of FFT points and remaining information in the output symbol except the zero-setting length.

19. A computer-readable storage medium having stored thereon computer instructions which, when executed by a processor, implement the steps of the method of any one of claims 1-5.

20. A computer-readable storage medium having stored thereon computer instructions which, when executed by a processor, implement the steps of the method of any one of claims 6-8.
